# EUROPEAN PATENT APPLICATION

(11) **EP 4 589 941 A1**
(43) Date of publication of application: **23.07.2025**
(21) Application number: 23865389.3
(22) Date of filing: 07.09.2023
(51) Int. Cl.: H04N 5/76, G06F 16/54

(54) **DATA GENERATING DEVICE, DATA GENERATING METHOD, PROGRAM, AND RECORDING MEDIUM**

(30) Priority: 15.09.2022 JP 2022147232
(71) Applicant: FUJIFILM Corporation, Tokyo 106-8620 (JP)
(72) Inventor: YANO Hironori, Saitama-shi, Saitama 331-9624 (JP)
(74) Representative: Meissner Bolte Partnerschaft mbB
(86) International application number: PCT/JP2023/032602
(87) International publication number: WO 2024/058034

(57) **Abstract**

A data generation device, a data generation method, a program, and a recording medium capable of generating display image data for displaying a plurality of images in an appropriate order are provided.

A data generation device according to an embodiment of the present invention includes a processor, in which the processor is configured to set a display image group to which an order of displaying a plurality of images included in an image group is assigned, and create a plurality of display image groups by changing the assigned order, for each of the plurality of display image groups, create compressed data by compressing image data of each of a plurality of images included in the display image group in accordance with the assigned order, and select the display image group satisfying a first selection condition from the plurality of display image groups based on information related to a data amount of the compressed data.

## Description

### BACKGROUND OF THE INVENTION

### 1. Field of the Invention

The present invention relates to a data generation device, a data generation method, a program, and a recording medium for generating display image data for displaying a plurality of images in order.

### 2. Description of the Related Art

A technique of displaying a plurality of images in order as in a slide show, a graphics interchange format (GIF) video, or the like (hereinafter, referred to as the slide show or the like) has already been used (for example, refer to JP2011-103588A).

### SUMMARY OF THE INVENTION

In generating data (hereinafter, display image data) for displaying a plurality of images in order as in the slide show or the like, it is important to consider a degree of similarity between consecutively displayed images, a data amount of the display image data, and the like. There is a demand for a device, a method, a program, and a recording medium capable of generating the display image data for displaying the plurality of images in an appropriate order.

The present invention has been conceived in view of the above circumstances, and an object of the present invention is to provide a data generation device, a data generation method, a program, and a recording medium capable of generating display image data for displaying a plurality of images in an appropriate order.

In order to achieve the object, a data generation device according to an aspect of the present invention includes a processor, in which the processor is configured to set a display image group to which an order of displaying a plurality of images included in an image group is assigned, and create a plurality of display image groups by changing the assigned order, for each of the plurality of display image groups, create compressed data by compressing image data of each of a plurality of images included in the display image group in accordance with the assigned order, and select the display image group satisfying a first selection condition from the plurality of display image groups based on information related to a data amount of the compressed data.

The first selection condition may be having a smallest data amount after compression.

The processor may be configured to execute thinning processing on data generated based on the selected display image group.

Image data of at least one image of the plurality of images included in the image group may not include information about an imaging date and time.

Image data of at least one image of the plurality of images included in the image group may be image data obtained by scanning a printed matter.

The processor may be configured to use a thumbnail image of each of the plurality of images included in the image group in creating the plurality of display image groups.

The processor may be configured to classify a plurality of images included in an image set into two or more image groups based on image feature amounts of the plurality of images included in the image set.

The processor may be configured to classify a plurality of images included in an image set into two or more image groups based on information about a storage date and time of image data of each of the plurality of images included in the image set.

The processor may be configured to select a representative image for each of the two or more image groups, set a representative image group to which an order of displaying a plurality of the representative images is assigned, and create a plurality of representative image groups by changing the assigned order, for each of the plurality of representative image groups, create representative compressed data by compressing image data of each of the plurality of representative images included in the representative image group in accordance with the assigned order, select the representative image group satisfying a second selection condition from the plurality of representative image groups based on information related to a data amount of the representative compressed data, and determine an order of displaying the plurality of images included in the image set in accordance with the order assigned to the selected representative image group.

The second selection condition may be having a smallest data amount after compression.

The processor may be configured to, in at least one of classifying the plurality of images included in the image set into two or more image groups or creating the plurality of representative image groups, use a thumbnail image of each of the plurality of images included in the image set.

In order to achieve the object, a data generation method according to the aspect of the present invention includes, via a processor, a step of setting a display image group to which an order of displaying a plurality of images included in an image group is assigned, and creating a plurality of display image groups by changing the assigned order, a step of creating, for each of the plurality of display image groups, compressed data by compressing image data of each of a plurality of images included in the display image group in accordance with the assigned order, and a step of selecting the display image group satisfying a first selection condition from the plurality of display image groups based on information related to a data amount of the compressed data.

The data generation method may further include, via the processor, a step of classifying a plurality of images included in an image set into two or more image groups based on image feature amounts of the plurality of images included in the image set.

The data generation method may further include, via the processor, a step of selecting a representative image for each of the two or more image groups, a step of setting a representative image group to which an order of displaying a plurality of the representative images is assigned, and creating a plurality of representative image groups by changing the assigned order, a step of creating, for each of the plurality of representative image groups, representative compressed data by compressing image data of each of the plurality of representative images included in the representative image group in accordance with the assigned order, a step of selecting the representative image group satisfying a second selection condition from the plurality of representative image groups based on information related to a data amount of the representative compressed data, and a step of determining an order of displaying the plurality of images included in the image set in accordance with the order assigned to the selected representative image group.

According to the present invention, a program for causing a computer to execute each step included in the data generation method can be implemented. According to the present invention, a computer-readable recording medium on which a program for causing a computer to execute each step included in the data generation method is recorded can be implemented.

According to the present invention, a data generation device, a data generation method, a program, and a recording medium capable of generating display image data for displaying a plurality of images in an appropriate order can be provided.

### BRIEF DESCRIPTION OF THE DRAWINGS

Fig. 1 is a diagram illustrating a data generation system including a data generation device according to a first embodiment of the present invention.
Fig. 2 is a diagram illustrating an example of a screen displayed on a user terminal in generating data.
Fig. 3 is a diagram illustrating a hardware configuration of the data generation device according to the first embodiment of the present invention.
Fig. 4 is a diagram illustrating functions of the data generation device according to the first embodiment of the present invention.
Fig. 5 is a conceptual diagram of processing executed by the data generation device according to the first embodiment of the present invention.
Fig. 6 is a diagram illustrating a data generation flow in the data generation system including the data generation device according to the first embodiment of the present invention.
Fig. 7 is a diagram illustrating functions of a data generation device according to a second embodiment of the present invention.
Fig. 8A is a conceptual diagram of processing executed by the data generation device according to the second embodiment of the present invention (Part 1).
Fig. 8B is a conceptual diagram of processing executed by the data generation device according to the second embodiment of the present invention (Part 2).
Fig. 9 is a diagram illustrating a data generation flow in a data generation system including the data generation device according to the second embodiment of the present invention.

### DESCRIPTION OF THE PREFERRED EMBODIMENTS

Specific embodiments of the present invention will be described with reference to the drawings. The embodiments described below are merely an example for easy understanding of the present invention and do not limit the present invention. The present invention may be changed or improved from the following embodiments without departing from the gist of the present invention. The present invention includes its equivalents.

In the present specification, the concept of "device" includes a single device providing a specific function alone and also includes a plurality of devices that are distributed to be present independently of each other and that provide a specific function in cooperation (collaboration) with each other.

In the present specification, the term "user" means a user who uses a data generation device according to an embodiment of the present invention. Use of the data generation device means use of functions of the data generation device and includes not only direct operation of the data generation device but also use of the functions of the data generation device from another device (for example, a user terminal).

### <<First Embodiment>>

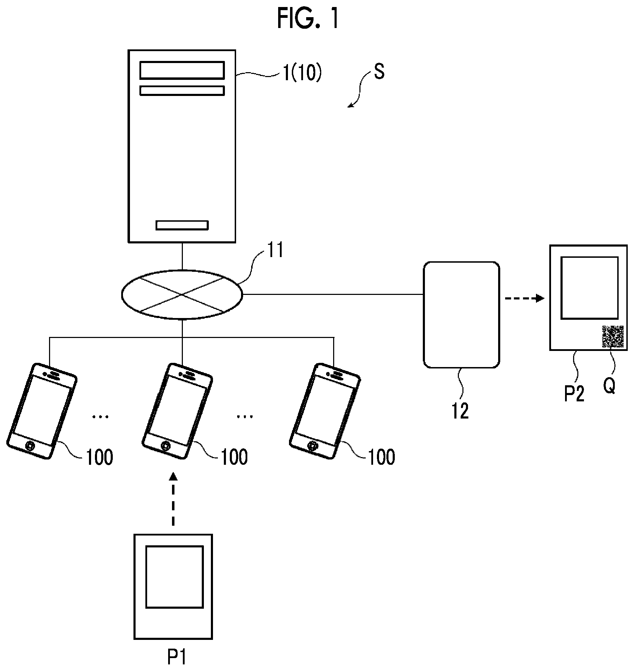

Hereinafter, a data generation device (hereinafter, a data generation device 10) according to a first embodiment of the present invention and a data generation system S to which the data generation device 10 is applied will be described with reference to Figs. 1 to 6.

### <Data Generation System>

The data generation system S to which the data generation device 10 according to the first embodiment of the present invention is applied will be described with reference to Fig. 1.

The data generation system S generates display image data used in a slide show or a GIF video. The term "slide show" means content displaying a plurality of images in order. For example, methods of displaying the plurality of images in order include a method of sequentially switching an image displayed on a screen for each predetermined time or a method of sequentially displaying images while moving (scrolling) the images from one end side to the other end side of the display screen (for example, from a lower side to an upper side of the display screen).

The term "GIF video" means content displaying a plurality of images in order. Methods of displaying the plurality of images in order include a method of sequentially switching the image displayed on the screen for each predetermined time, as in the slide show. Examples of a feature of the GIF video include a shorter switching time (for example, less than one second) of the image displayed on the screen than the slide show, and the user enjoys the GIF video as a changing image.

In the first embodiment of the present invention, the term "display image data" means data for displaying the plurality of images in order in the slide show or the GIF video. The display image data includes data of all images displayed in the slide show or the GIF video.

As illustrated in Fig. 1, the data generation system S is composed of a server computer 1, a user terminal 100 used by each user, and a printer 12.

The server computer 1 is a computer forming a platform of the data generation system S and includes the data generation device 10. The server computer 1 may be a server for a cloud service, specifically, a server computer for an application service provider (ASP), software as a service (SaaS), a platform as a service (PaaS), or an infrastructure as a service (IaaS). Details of the data generation device 10 will be described later.

The user terminal 100 is a computer used by the user and is, specifically, composed of a smart device such as a smartphone, a tablet terminal, a laptop personal computer (PC), or the like. The user terminal 100 comprises a processor, a memory, and a communication interface. The user terminal 100 stores an application program (hereinafter, a data generation application) for using the data generation system S. In order to use the data generation system S, the user downloads the data generation application from a predetermined site and installs the data generation application on the user terminal 100.

The user terminal 100 is equipped with a camera. As illustrated in Fig. 1, the user images (scans) a first printed matter P1 via the user terminal 100. The first printed matter P1 is scanned in order to acquire an image (specifically, a generation image described later) used for generating the display image data. Specifically, the user terminal 100 acquires image data of a scanned image of the printed matter P1 by scanning the first printed matter P1, specifically, imaging the first printed matter P1 via the camera of the user terminal 100.

For example, the first printed matter P1 is a film on which an image captured by a camera is printed using an instant photographic method. Specifically, the first printed matter P1 is a color instant film having photosensitivity and can be acquired using, for example, the printer 12 described later. The first printed matter P1 may be printed using an ink jet method, a sublimation-type thermal transfer method, an electrophotographic method using toner, or the like.

As illustrated in Fig. 1, each of an image region and a frame region is present on an image forming surface of the first printed matter P1. The image region is a center region on the image forming surface, and the frame region is a region that surrounds the image region and that has a rectangular frame shape on the image forming surface. The image captured by the camera is printed (photographically printed) in the image region. The frame region is a part of the first printed matter P1 surrounded by four sides, each pair of two sides being substantially parallel to each other, and corresponds to a part (an edge part) structurally not having an image in printing consisting of a silver salt photosensitive instant film. While white is a representative background color of the frame, any pattern can be provided on the frame during manufacture.

The image data of the read image obtained by scanning the first printed matter P1 may include exchangeable image file format (Exif) information. Information about an imaging date and time included in the Exif information is information about a date and time of scanning of the first printed matter P1 via the user terminal 100 and is not information about a date and time of capturing of the image formed in the image region of the image forming surface of the first printed matter P1.

The printer 12 performs printing in response to a printing request from the user terminal 100 through a network 11. For example, the printer 12 is an easy-to-carry portable printer using the instant photographic method. The printer 12 prints an image indicated by image data transmitted from the user terminal 100, on a photosensitive film based on the image data. Accordingly, the first printed matter P1 is acquired.

The printer 12 prints one or a plurality of images selected from the plurality of images displayable by the display image data generated by the data generation system S, on a photosensitive film. Accordingly, a second printed matter P2, that is, a printed matter of the image based on the display image data, is acquired.

In outputting the second printed matter P2, an accessory image Q is formed in a frame region of the printed matter P2, as illustrated in Fig. 1. For example, the accessory image Q is a QR code (registered trademark) and includes coded information indicating a storage location of the display image data used in the slide show or the GIF video. The user terminal 100 reads the accessory image Q via the camera of the user terminal 100 to specify the storage location of the display image data from the information included in the accessory image Q and accesses the display image data stored in the specified storage location. Accordingly, the user can reproduce and enjoy the slide show or the GIF video on the user terminal 100 by downloading the display image data used in the slide show or the GIF video from the storage location and displaying the data.

The second printed matter P2 is used for reproducing the slide show or the GIF video using the display image data.

A method of image printing in the printer 12 is not limited to the instant photographic method and may be the ink jet method, the sublimation-type thermal transfer method, the electrophotographic method using toner, or the like.

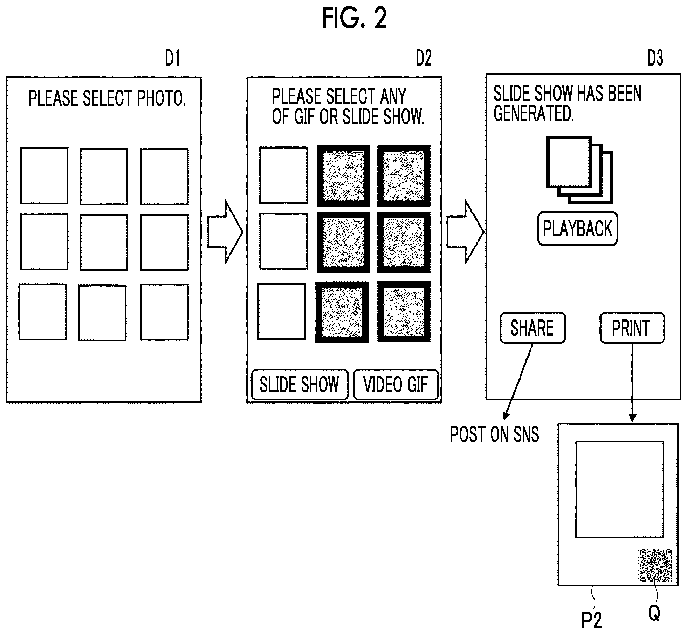

Next, an example of a screen displayed on the user terminal 100 will be described with reference to Fig. 2.

In the following, the user terminal 100 is assumed to be a smartphone. First, the user starts the data generation application stored in the user terminal 100. After the data generation application starts, the user performs a predetermined operation, and this causes the screen of the user terminal 100 to transition to an image list screen D1 illustrated in Fig. 2.

On the image list screen D1, a list of a plurality of images (in a strict sense, thumbnail images of each image) stored in the user terminal 100 is displayed. For example, the plurality of images stored in the user terminal 100 are images captured by the camera of the user terminal 100 or images downloaded through the network 11. The user selects the plurality of images to be displayed as the slide show or the GIF video on the image list screen D1. In a case where the plurality of images are selected, the screen of the user terminal 100 transitions to a selection screen D2.

The plurality of images displayed on the image list screen D1 may be all images stored in the user terminal 100 or may be images set as favorite images by the user among the images stored in the user terminal 100.

On the selection screen D2, icons "slide show" and "GIF video" in a selectable state are displayed below the screen. For example, a case where the user selects the icon "slide show" will be described below.

In a case where selection of the user is received through the selection screen D2, the data generation device 10 (the server computer 1) in the data generation system S receives a selection result of the user from the user terminal 100 and executes a series of processing for generating the display image data for the slide show. After the display image data is generated, the screen of the user terminal 100 transitions to a determination screen D3.

The determination screen D3 is displayed for the user to determine an aspect of provision of the generated display image data, and icons "playback", "share", and "print" in a selectable state are displayed on the determination screen D3. In a case where any of the icons is selected by the user, the display image data is provided in an aspect corresponding to the selected icon. For example, in a case where the icon "playback" is selected, the slide show using the display image data is played back on the user terminal 100. In a case where the icon "share" is selected, the slide show using the display image data is posted on a social networking service (SNS) in association with an SNS account of the user. In a case where the icon "print" is selected, the image based on the display image data is printed on a photosensitive film by the printer 12, and the second printed matter P2 is output, as illustrated in Fig. 1.

The aspect of provision of the generated display image data may be an aspect other than the above aspects. For example, the user may share the display image data for the slide show with other users by storing the display image data in a portable storage medium and passing the portable storage medium.

The data generation system S may have a function of periodically generating the display image data for the slide show or the GIF video based on a plurality of images automatically selected from the user terminal 100 and providing (presenting) the display image data to the user, in a case where a certain number of images or more are accumulated in the user terminal 100.

The data generation system S may have a function of recommending any one of the slide show or the GIF video to the user depending on the plurality of images selected by the user. Specifically, for example, in a case where all of the plurality of images selected by the user are captured in a predetermined period, for example, in a case where the imaging date and time of each of the plurality of images falls within one minute, the data generation system S recommends the GIF video. Meanwhile, in a case where the imaging date and time of any of the plurality of images is not in the predetermined period, the slide show may be recommended.

For example, the data generation system S may have a function of switching to the display image data for the GIF video image even after the display image data for the slide show is generated. That is, the data generation system S may have a function of changing specifications from one of the slide show or the GIF video to the other.

### <Data Generation Device>

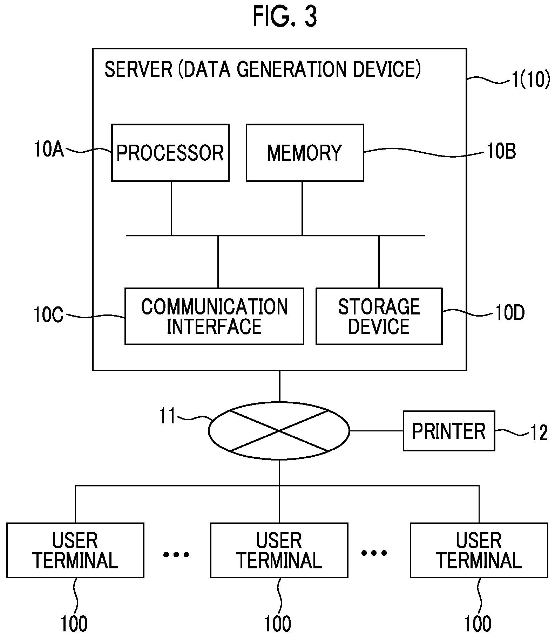

Next, a configuration of the data generation device 10 will be described with reference to Figs. 3 to 5.

In the first embodiment of the present invention, the data generation device 10 is composed of the server computer 1, as described above. The number of computers constituting the data generation device 10 may be one or two or more. The data generation device 10 is implemented by a processor and a program executable by the processor and is composed of, for example, a general-purpose computer.

As illustrated in Fig. 3, the server computer 1 constituting the data generation device 10 comprises a processor 10A, a memory 10B, a communication interface 10C, and a storage device 10D.

For example, the processor 10A is composed of a central processing unit (CPU), a graphics processing unit (GPU), a digital signal processor (DSP), or a tensor processing unit (TPU).

For example, the memory 10B is composed of a semiconductor memory such as a read only memory (ROM) and a random access memory (RAM).

For example, the communication interface 10C is composed of a network interface card or a communication interface board.

For example, the storage device 10D is composed of a storage incorporated in or attached to the server computer 1. However, the present invention is not limited to this, and the storage device 10D may be composed of a third computer (for example, an external server) capable of communicating with the server computer 1.

A program (hereinafter, a data generation program) for functioning as the data generation device 10 is installed on the server computer 1. The data generation program is a program for causing the computer to execute each step performed in the data generation system S. That is, the processor 10A reads out the data generation program and executes a series of processing related to the data generation system S.

The data generation program may be acquired by reading the data generation program from a computer-readable recording medium or may be acquired by downloading the data generation program through a communication line such as the Internet or an intranet.

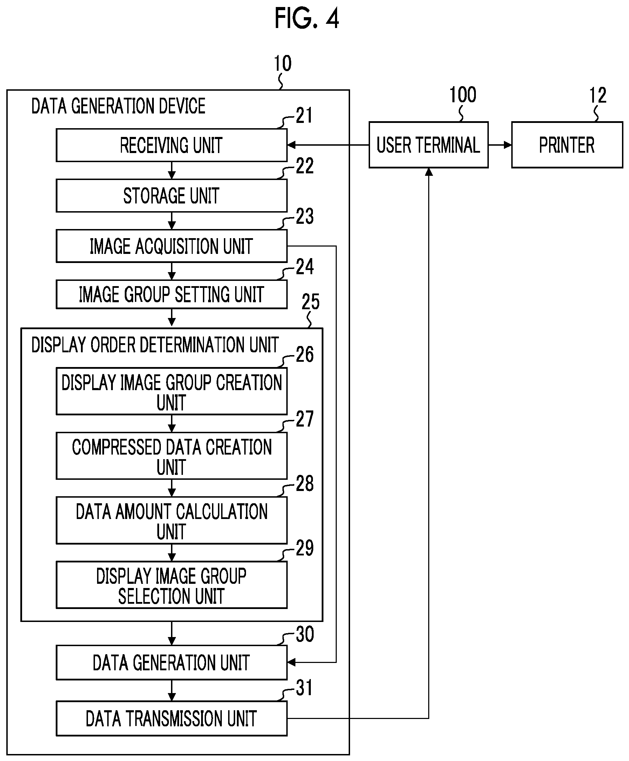

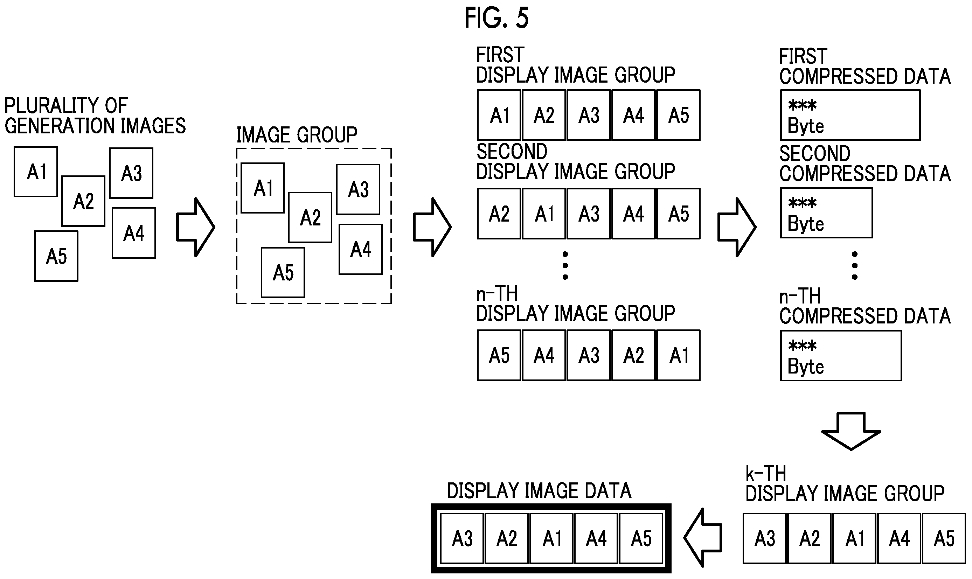

Next, a configuration of the data generation device 10 will be described again from a functional perspective with reference to Figs. 4 and 5.

As illustrated in Fig. 4, the data generation device 10 comprises a receiving unit 21, a storage unit 22, an image acquisition unit 23, an image group setting unit 24, a display order determination unit 25, a data generation unit 30, and a data transmission unit 31. These functional units are implemented by cooperation between a hardware device of the server computer 1 constituting the data generation device 10 and the data generation program as software.

The receiving unit 21 receives data related to a selection operation of the user performed on the user terminal 100 from the user terminal 100. Specifically, the receiving unit 21 receives image data of each image selected by the user as the image used for generating the display image data among the plurality of images stored in the user terminal 100. The image data of each selected image includes information such as Exif. The receiving unit 21 receives data indicating a selection result indicating which of the slide show or the GIF video is selected by the user on the selection screen D2.

The storage unit 22 stores various types of data received by the receiving unit 21. The data stored in the storage unit 22 includes the image data of each of the plurality of images selected by the user as the image used for generating the display image data. The storage unit 22 is mainly composed of the storage device 10D of the server computer 1.

The image acquisition unit 23 acquires the plurality of images used for generating the display image data based on the plurality of pieces of image data stored in the storage unit 22. For example, the case illustrated in Fig. 5 will be described. In this case, the image acquisition unit 23 acquires images A1 to A5.

A method of acquiring the image used for generating the display image data from the image data, particularly the image data of the read image will be described later.

The image group setting unit 24 sets the plurality of images acquired by the image acquisition unit 23 as an image group. In the case described below, the image group setting unit 24 sets all of the plurality of images (in Fig. 5, the images A1 to A5) acquired by the image acquisition unit 23 as the image group.

The display order determination unit 25 determines a display order of the plurality of images included in the image group. In the first embodiment of the present invention, the display order determination unit 25 is composed of a display image group creation unit 26, a compressed data creation unit 27, a data amount calculation unit 28, and a display image group selection unit 29, as illustrated in Fig. 4.

The display image group creation unit 26 sets a display image group to which an order of displaying the plurality of images included in the image group is assigned, and creates a plurality of display image groups by changing the order. More specifically, in a case where the number of the plurality of images is N (N is a natural number greater than or equal to 2), the display image group creation unit 26 sets display image groups as many as a factorial of N. For example, in the case illustrated in Fig. 5, the number of the plurality of images included in the display image group is five, so the plurality of display image groups as many as a factorial of 5 (= 120) are created. That is, in the case of Fig. 5, first to hundred-and-twentieth display image groups are created.

The compressed data creation unit 27, for each of the plurality of display image groups, creates compressed data (compressed video data) by compressing the image data of each of the plurality of images included in the display image group in accordance with the assigned order. For example, in the case illustrated in Fig. 5, first compressed data is data obtained by compressing the first display image group, and n-th (n is a natural number greater than or equal to 2) compressed data is data obtained by compressing the n-th display image group. Compression processing uses a general compression method. For example, moving picture experts group (MPEG) such as MPEG-4, graphics interchange format (GIF), or audio video interleave (AVI) is used.

The data amount calculation unit 28 calculates a data amount (specifically, a data size) of the compressed data created by the compressed data creation unit 27. For example, in the case illustrated in Fig. 5, the data amount calculation unit 28 calculates the data amount of each of the first to n-th compressed data.

The data amount of each compressed data changes depending on the order of displaying the plurality of images. Specifically, while the compressed data is obtained by arranging data corresponding to each of the plurality of images in accordance with the order of displaying the plurality of images, data corresponding to a subsequent image out of two consecutive images is data corresponding to a change (a difference) from a previous image. Accordingly, the data amount of the compressed data is increased as the change between the consecutive images in arrangement of the plurality of images in the display order is increased, and the data amount of the compressed data is decreased as the change between the consecutive images is decreased.

The display image group selection unit 29 selects a display image group satisfying a first selection condition from the plurality of display image groups based on information related to the data amount of the compressed data. In the first embodiment, the "information related to the data amount of the compressed data" is, for example, a data capacity or a data size of the compressed data, and the "first selection condition" is, for example, the smallest data amount after compression.

For example, in the case illustrated in Fig. 5, in a case where the data amount of the k-th compressed data is the smallest among the first to n-th compressed data, the display image group selection unit 29 selects the k-th display image group corresponding to the k-th compressed data.

The data generation unit 30 generates the display image data for the slide show or the GIF video image in accordance with the order assigned to the selected display image group.

More specifically, the data generation unit 30 specifies the selection result based on data indicating which of the slide show or the GIF video is selected by the user in the data stored in the storage unit 22. In the following, the slide show is selected.

The data generation unit 30 generates the display image data for the slide show using the display image group selected by the display image group selection unit 29. For example, in the case illustrated in Fig. 5, the data generation unit 30 generates the display image data for displaying the plurality of images included in the display image group in accordance with the order assigned to the k-th display image group selected by the display image group selection unit 29. The data generation unit 30 generates data of the slide show for displaying the plurality of images in order at an image display interval (a display time of one display image) of the slide show set in advance.

In the present embodiment, the data generation unit 30 executes thinning processing on the display image data (specifically, the display image data before processing). The thinning processing is processing of thinning out a part of the plurality of images to be displayed in the slide show based on the display image data and is, for example, in the present embodiment, processing of thinning out any of the plurality of images similar to each other among the plurality of images to be displayed in the slide show. Specifically, in the thinning processing, a feature amount of each of the plurality of images, particularly a feature amount of a region in which a subject is captured is calculated, and a degree of similarity between images is calculated from the calculated feature amount. In a case where there are a plurality of images having the degree of similarity greater than or equal to a reference value, any of the plurality of images is thinned out in the thinning processing.

The data generation unit 30 may use the display image data before the thinning processing as the display image data without executing the thinning processing.

The data generation unit 30 may use the k-th compressed data created by the compressed data creation unit 27 as the display image data.

The data transmission unit 31 transmits the display image data for the slide show to the user terminal 100. The user plays back the slide show based on the transmitted display image data. The user can post the slide show based on the display image data on the SNS as posted content. The user can acquire the printed matter P2 on which the accessory image Q including the coded information indicating the storage location of the display image data is printed, by executing printing processing via the printer 12 based on the display image data.

### <Data Generation Flow>

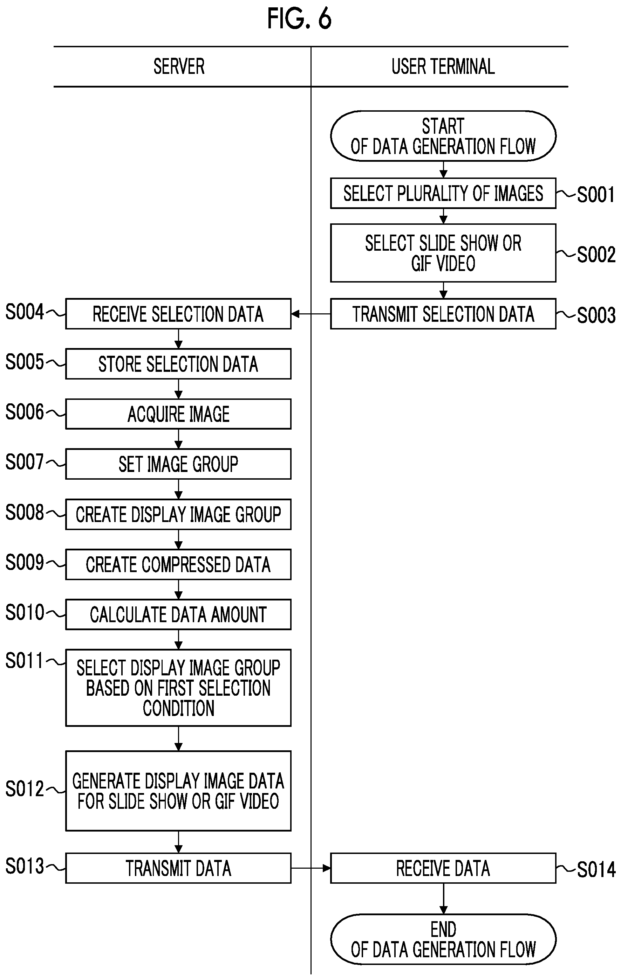

Next, a data generation flow using the data generation device 10 will be described with reference to Fig. 6. The data generation flow described below is a flow of a series of processing for generating the display image data using a data generation method according to the first embodiment of the present invention.

The data generation flow starts in response to a data generation flow start operation performed on the user terminal 100 by the user. In the data generation flow, first, the image list screen D1 is displayed on the user terminal 100. On the image list screen D1, the list of images accumulated in the user terminal 100 is displayed in a selectable state, and the user selects the plurality of images to be displayed as the slide show or the GIF video from the list of images displayed on the screen D1 (S001).

Next, the selection screen D2 is displayed on the user terminal 100, and the user selects any of the slide show or the GIF video on the selection screen D2 (S002).

Then, the user terminal 100 transmits the image data of the plurality of images selected in step S001 and the data indicating the selection result in step S002 to the data generation device 10 (the server computer 1) through the network 11 (S003). The processor 10A of the data generation device 10 receives various types of data transmitted from the user terminal 100 (S004). The processor 10A stores the data received from the user terminal 100 in the storage device 10D (S005).

Next, the processor 10A acquires the image (hereinafter, referred to as a generation image) used for generating the display image data based on the image data of each of the plurality of images selected by the user (S006). Specifically, the image selected by the user is a read image acquired by reading (scanning) the printed matter P1 by the user using the user terminal 100. The read image includes a region in which the printed matter P1 is captured, and a region in which a background around the printed matter P1 is captured. The processor 10A specifies where is the region in which the printed matter P1 is captured (hereinafter, referred to as a print region) in the read image. Specifically, the processor 10A recognizes a boundary of the largest rectangle, trapezoid, or shape similar to these in the read image and extracts a region inside the boundary as the print region. The processor 10A acquires the print region as the generation image.

The processor 10A may extract a region having a rectangular frame shape as the frame region from the print region and further extract a region excluding the frame region from the print region as the image region. In this case, the processor 10A may acquire the image region as the generation image.

The generation image is acquired using the above procedure for each of the plurality of images selected by the user.

Next, the processor 10A sets the image group including the plurality of generation images acquired in step S006 (S007). Next, the processor 10A sets the display image group to which the order of displaying the plurality of generation images included in the image group is assigned, and creates the plurality of display image groups by changing the order (S008). Then, the processor 10A, for each of the plurality of display image groups, generates the compressed data by compressing the image data of each of the plurality of generation images included in the display image group in accordance with the assigned order (S009). The compressed data is created in the manner described above.

Next, the processor 10A calculates the data amount (the data size) of the compressed data generated for each display image group in step S009 (S010). The processor 10A selects the display image group satisfying the first selection condition from the plurality of display image groups based on the information related to the calculated data amount of the compressed data (S011).

The processor 10A generates the display image data for the slide show or the GIF video using the image data of each of the plurality of generation images included in the display image group in accordance with the order assigned to the display image group selected in step S011 (S012). The processor 10A transmits the generated display image data to the user terminal 100 (S013). In a case where the user terminal 100 receives the display image data (S014), the data generation flow ends at that point in time.

### <Effectiveness of First Embodiment>

As described above, by using the above procedure, the data generation device 10 according to the first embodiment can generate the display image data for displaying the plurality of images (the generation images) in order using an appropriate procedure.

Specifically, in generating the display image data, the data generation device 10 according to the first embodiment creates the plurality of display image groups, generates the compressed data for each display image group, and calculates the data amount of the compressed data. The calculated data amount of the compressed data correlates with an amount of change between adjacent images in arrangement of the plurality of images in the display order. That is, the amount of change between the adjacent images is decreased as the data amount of the compressed data is decreased, and the amount of change between the adjacent images is increased as the data amount of the compressed data is increased.

According to the first embodiment, the display image data corresponding to a demand and the like of the user can be generated using the above feature. For example, in a case where the user demands a slide show or a GIF video with various changes between images in displaying the plurality of images in order, the processor 10A selects a display image group having a large data amount of the compressed data. Accordingly, display image data having a large amount of change between the adjacent images in displaying the plurality of images in order is generated.

Meanwhile, in a case where the user demands a slide show or a GIF video having a little change between images, the processor 10A selects a display image group having a small data amount of the compressed data. Accordingly, display image data having a small amount of change between the adjacent images in displaying the plurality of images in order is generated. In a case where the plurality of images are displayed in order in the slide show or the GIF video having a small change between images, the images can be switched more naturally (more smoothly).

In a case where the user demands display image data having a smaller data capacity, the processor 10A selects a display image group having a smaller data amount of the compressed data, for example, a display image group having the smallest data amount of the compressed data. Accordingly, display image data having a smaller data amount (data size) is generated.

Various selection conditions corresponding to the demand of the user correspond to the "first selection condition" according to the embodiment of the present invention.

As described above, in the first embodiment, the processor 10A selects the display image group satisfying the first selection condition from the plurality of display image groups based on the information related to the data amount of the compressed data. Accordingly, the data generation device 10 can display the plurality of images in an appropriate order in accordance with the demand of the user.

In the present embodiment, having the smallest data amount of the compressed data can be set as the first selection condition. In this case, the display image data for the slide show or the GIF video is generated such that the change between the adjacent images in displaying the plurality of images in the display order is minimized. Accordingly, the plurality of images can be displayed in an order appropriate for the demand of the user, and the images switch (transition) more smoothly in displaying the plurality of images based on the display image data.

The processor 10A can execute the thinning processing on the display image data generated based on the selected display image group. That is, as described above, the processor 10A executes processing of thinning out a part (similar images) of the plurality of images displayed in the slide show based on the display image data. Accordingly, the processor 10A can further reduce the data amount of the display image data.

Data generation processing performed by the data generation device 10 according to the first embodiment can generate the display image data regardless of whether or not the information about the imaging date and time of the image is present. That is, in the first embodiment, even for an image not including the information about the imaging date and time, the display image data can be generated using the image.

More specifically, in recent years, there has been an increasing number of cases where images obtained by imaging are uploaded to a server and shared between a plurality of users through a network. In uploading image data of the images to the server, the Exif information such as the imaging date and time may be deleted. In this case, the plurality of images may not be displayable in an appropriate order.

Meanwhile, according to the data generation device 10 according to the first embodiment, the processor 10A determines the display order of the images based on the information related to the data amount of the compressed data regardless of the information about the imaging date and time. Thus, even the image not including the information about the imaging date and time can be displayed in an appropriate order.

By using the above advantage, for example, the data generation device 10 can generate the display image data using the image (the read image) obtained by scanning the first printed matter P1 by the user. Accordingly, even in a case where the imaging date and time of the image printed on the first printed matter P1 illustrated in Fig. 1 is unknown, the display image data can be appropriately generated using the image.

### <<Second Embodiment>>

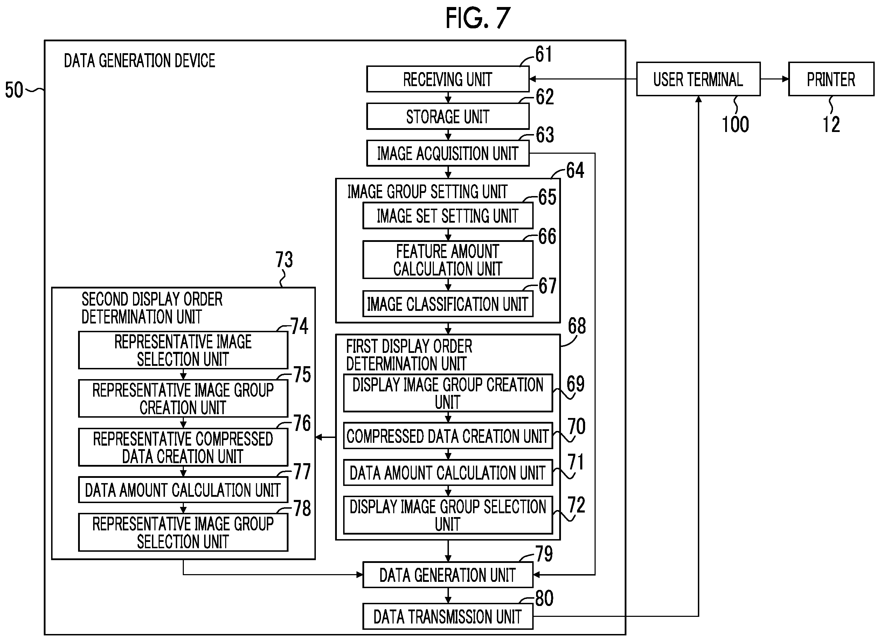

Next, a data generation device (hereinafter, a data generation device 50) according to a second embodiment of the present invention and a data generation system to which the data generation device 50 is applied will be described with reference to Figs. 7 to 9. In the following description, different parts from the first embodiment will be described, and duplicate parts of the first embodiment will not be described.

A configuration of the data generation system and a hardware configuration of the data generation device 50 are the same as the configuration of the data generation system S and the hardware configuration of the data generation device 10 in the first embodiment and thus, will not be described.

### <Data Generation Device>

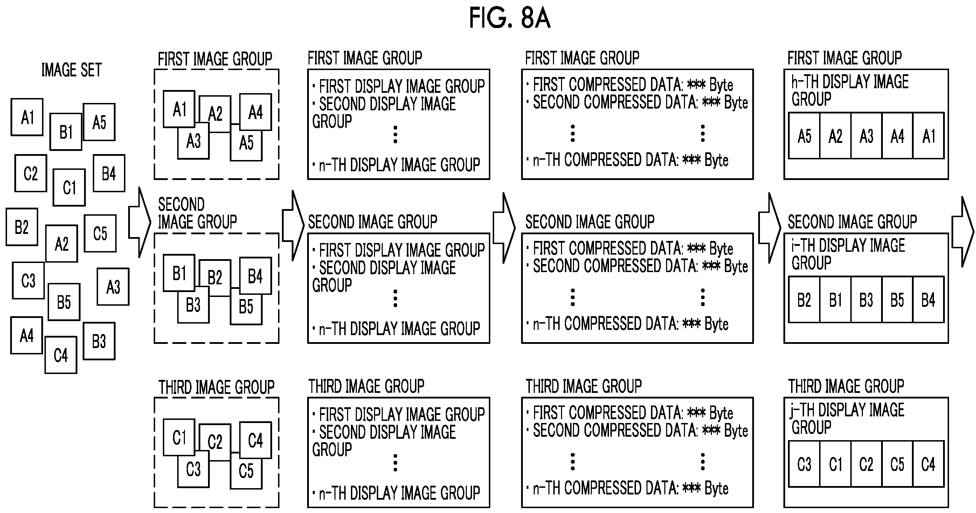

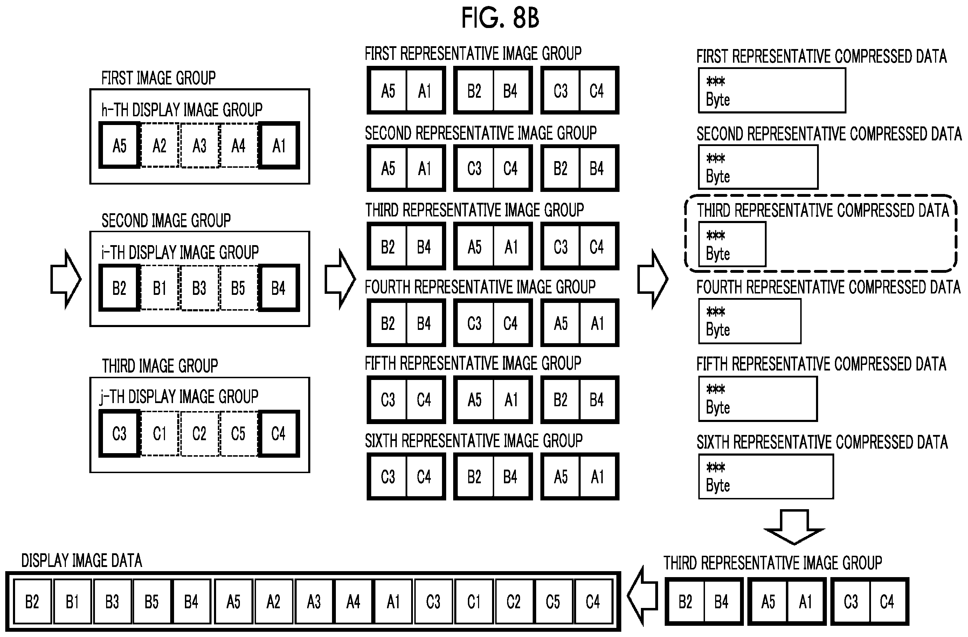

Hereinafter, a configuration of the data generation device 50 will be described from a functional perspective with reference to Figs. 7, 8A, and 8B.

As illustrated in Fig. 7, the data generation device 50 is composed of a receiving unit 61, a storage unit 62, an image acquisition unit 63, an image group setting unit 64, a first display order determination unit 68, a second display order determination unit 73, a data generation unit 79, and a data transmission unit 80.

The receiving unit 61, the storage unit 62, and the image acquisition unit 63 are the same as the receiving unit 21, the storage unit 62, and the image acquisition unit 63 in the first embodiment and thus, will not be described.

The image group setting unit 64 sets a plurality of images acquired by the image acquisition unit 63 as an image group. More specifically, the image group setting unit 64 is composed of an image set setting unit 65, a feature amount calculation unit 66, and an image classification unit 67.

The image set setting unit 65 sets the plurality of images acquired by the image acquisition unit 63 as an image set. In the example illustrated in Fig. 8A, the image set setting unit 65 sets all of 15 images A1 to A5, B1 to B5, and C1 to C5 acquired by the image acquisition unit 23 as the image set.

The feature amount calculation unit 66 calculates an image feature amount of each of the plurality of images included in the image set. The feature amount calculation unit 66 may calculate the image feature amount using a well-known image analysis technique. For example, by performing image analysis for each image, the feature amount calculation unit 66 may calculate a color histogram of the image from gradation of pixels constituting the image and calculate the image feature amount based on the color histogram.

The image classification unit 67 classifies (clusters) the plurality of images included in the image set into two or more image groups based on the image feature amounts of the plurality of images included in the image set. Fig. 8A illustrates a case where the image classification unit 67 classifies 15 images A1 to A5, B1 to B5, and C1 to C5 into three image groups based on the image feature amounts.

The image group setting unit 64 may separately have a function of counting the number of the plurality of images included in the image set and setting the number of image groups in accordance with the number of images.

For example, in a case where the number of the plurality of images included in the image set is greater than or equal to a predetermined number N (for example, N is a natural number of several tens, several hundreds, or more), the image group setting unit 64 may classify the plurality of images into two or more image groups based on the image feature amounts. In a case where the number of the plurality of images is less than the predetermined number N, the image group setting unit 64 may set all of the plurality of images included in the image set as one image group. In a case where the plurality of images included in the image set are set as one image group, the subsequent procedure is the same as the data generation method according to the first embodiment.

The first display order determination unit 68 is the same as the display order determination unit 25 in the first embodiment. The first display order determination unit 68 is composed of a display image group creation unit 69, a compressed data creation unit 70, a data amount calculation unit 71, and a display image group selection unit 72. These units are the same as the display image group creation unit 26, the compressed data creation unit 27, the data amount calculation unit 28, and the display image group selection unit 29, respectively, in the first embodiment.

A difference between the first display order determination unit 68 and the display order determination unit 25 is the number of image groups as a target to be processed. That is, the display order determination unit 25 in the first embodiment has one image group as a target to be processed, as illustrated in Fig. 5. Meanwhile, unlike the display order determination unit 25, the first display order determination unit 68 in the second embodiment has a plurality of image groups (that is, first to third image groups) as a target to be processed, as illustrated in Fig. 8A. However, from a functional perspective, the display order determination unit 25 and the first display order determination unit 68 are the same.

The first display order determination unit 68 selects a display image group for each image group. In the example illustrated in Fig. 8A, the first display order determination unit 68 selects the h-th display image group in the first image group, selects the i-th display image group in the second image group, and selects the j-th display image group in the third image group.

The second display order determination unit 73 is a functional unit newly added in the second embodiment, as illustrated in Fig. 7. While the first display order determination unit 68 determines the display order of the images in the image group, the second display order determination unit 73 determines a display order of the image groups. That is, the second display order determination unit 73 determines the display order of three image groups by handling each of the first to third image groups illustrated in Fig. 8A as one unit.

As illustrated in Fig. 7, the second display order determination unit 73 is composed of a representative image selection unit 74, a representative image group creation unit 75, a representative compressed data creation unit 76, a data amount calculation unit 77, and a representative image group selection unit 78.

The representative image selection unit 74 selects a representative image for each image group in each of two or more image groups. In the example illustrated in Fig. 8B, the representative image selection unit 74, for each image group, selects a combination of an image displayed first and an image displayed last in the display image group determined by the display image group selection unit 72, as the representative image.

In the example of Fig. 8B, in the first image group, the representative image selection unit 74 selects a combination of the first image A5 and the last image A1 of the h-th display image group as the representative image. In the second image group, the representative image selection unit 74 selects a combination of the first image B2 and the last image B4 of the i-th display image group as the representative image. In the third image group, the representative image selection unit 74 selects a combination of the first image C3 and the last image C4 of the j-th display image group as the representative image.

The representative image group creation unit 75 sets a display image group to which an order of displaying the plurality of images included in the image group is assigned, and creates a plurality of display image groups by changing the order. In the example illustrated in Fig. 8B, the number of representative images is the same as the number of image groups, that is, three. Thus, the number of the plurality of representative image groups is a factorial of 3. That is, six representative image groups are created.

As illustrated in Fig. 8B, the representative compressed data creation unit 76, for each of the plurality of representative image groups, creates representative compressed data by compressing the image data of each of the plurality of representative images included in the representative image group in accordance with the assigned order. A procedure of generating the representative compressed data via the representative compressed data creation unit 76 is the same as the procedure of generating the compressed data via the compressed data creation unit 27 in the first embodiment except for a target to be compressed and thus, will not be described in detail.

The data amount calculation unit 77 calculates a data amount of the representative compressed data created by the representative compressed data creation unit 76. A procedure of calculating the data amount via the data amount calculation unit 77 is the same as the procedure of calculating the data amount by the data amount calculation unit 28 in the first embodiment except for a target to be calculated and thus, will not be described.

The representative image group selection unit 78 selects a representative image group satisfying a second selection condition from the plurality of representative image groups based on information related to the data amount of the representative compressed data. In the case described below, the second selection condition is having the smallest data amount of the representative compressed data.

In the example illustrated in Fig. 8B, third representative compressed data has the smallest data amount among first to sixth representative compressed data. Thus, the representative image group selection unit 78 selects a third representative image group corresponding to the third representative compressed data.

The data generation unit 79 generates display image data for a slide show or a GIF video. More specifically, the data generation unit 79 specifies a selection result based on information stored in the storage unit 22, that is, information indicating which of the slide show or the GIF video is selected by the user. In the following, the slide show is selected.

The data generation unit 79 determines the order of displaying the plurality of images included in the image set based on the order assigned to the representative image group selected by the representative image group selection unit 78.

In the example of Fig. 8B, the data generation unit 79 determines the order of three image groups based on the order assigned to the third representative image group selected by the representative image group selection unit 78. Specifically, the second image group having the representative images B2 and B4 is determined to be the first, the first image group having the representative images A5 and A1 is determined to be the second, and the third image group having the representative images C3 and C4 is determined to be the third.

The data generation unit 79 applies the display image group selected by the display image group selection unit 72 for the order of displaying the plurality of images in each image group (the first to third image groups). In the example of Fig. 8A, in the first image group, the order assigned to the plurality of images included in the h-th display image group, that is, an order of the image A5, the image A2, the image A3, the image A4, and the image A1, is applied. In the second image group, the order assigned to the i-th display image group, that is, an order of the image B2, the image B1, the image B3, the image B5, and the image B4, is applied. In the third image group, the order assigned to the j-th display image group, that is, an order of the image C3, the image C1, the image C2, the image C5, and the image C4, is applied.

The data generation unit 79 determines the order of displaying the plurality of images included in the image set and generates the display image data for the slide show based on the above processing.

The data transmission unit 80 has the same function as the data transmission unit 31 in the first embodiment and thus, will not be described.

### <Data Generation Flow>

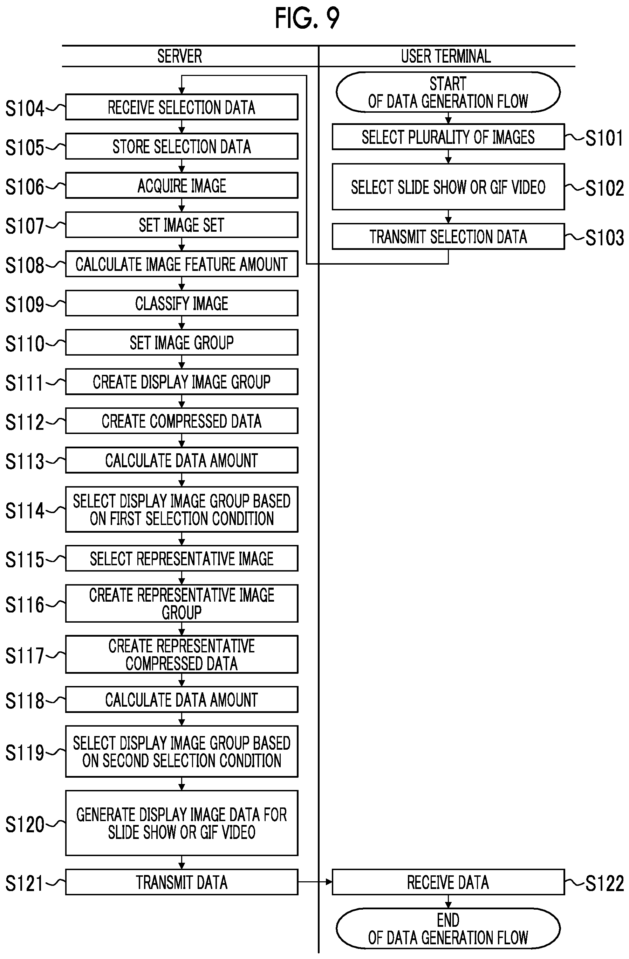

Next, a data generation flow using the data generation device 50 will be described with reference to Fig. 9.

The data generation flow starts from a point where the user selects the plurality of images to be displayed on the screen of the user terminal 100 as a slide show or a GIF video (S101). Processing in steps S102 to S106 is the same as steps S002 to S006 of the data generation flow in the first embodiment.

A processor of the data generation device 50 sets a plurality of images stored in a storage device of the data generation device 50 as the image set (S107). The processor of the data generation device 50 calculates an image feature amount of each of the plurality of images included in the image set (S108). The processor of the data generation device 50 classifies (clusters) the plurality of images into two or more image groups based on the image feature amounts of the plurality of images (S109). Subsequent processing in steps S110 to S114 is the same as steps S008 to S011 of the data generation flow in the first embodiment.

The processor of the data generation device 50 selects the representative image for each of two or more image groups (S115). Then, the processor of the data generation device 50 sets the representative image group to which the order of displaying the representative image selected for each image group (that is, the plurality of representative images) is assigned, and creates the plurality of representative image groups by changing the order (S116). The processor of the data generation device 50, for each of the plurality of representative image groups, creates the representative compressed data by compressing the image data of each of the plurality of representative images included in the representative image group in accordance with the assigned order (S117). The processor of the data generation device 50 calculates the data amount of the created representative compressed data (S118). The processor of the data generation device 50 selects the representative image group satisfying the second selection condition from the plurality of representative image groups based on the information related to the data amount of the representative compressed data (S119). The processor of the data generation device 50 generates the display image data for the slide show or the GIF video (S120). The processor of the data generation device 50 transmits the display image data to the user terminal 100 (S121). The user terminal 100 receives the display image data (S122).

When the above series of steps are finished, the data generation flow is finished.

### <Effectiveness of Second Embodiment>

As described above, according to the data generation device 50 according to the second embodiment, the processor of the data generation device 50 classifies the plurality of images included in the image set into two or more image groups based on the image feature amounts of the plurality of images included in the image set. Accordingly, the number of display image groups to be set is reduced compared to that in a case where all of the plurality of images included in the image set are set as one image group.

Specifically, in the case of Fig. 8A, the image classification unit 67 classifies 15 images A1 to A5, B1 to B5, and C1 to C5 into three image groups (that is, the first to third image groups) based on the image feature amounts. In this case, display image groups as many as a factorial of 5 (= 120) are created in each of the first to third image groups. Thus, the total number of display image groups is 360. Meanwhile, in a case where the image classification unit 67 sets the 15 images A1 to A5, B1 to B5, and C1 to C5 as one image group, the total number of display image groups is a factorial of 15. By classifying the plurality of images included in the image set into two or more image groups, the number of display image groups is reduced compared to that in a case where all of the plurality of images included in the image set are set as one image group. Accordingly, a calculation load in the data generation device 50 can be reduced.

A method of generating the display image data via the data generation device 50 according to the second embodiment is more effective than the data generation method via the data generation device 10 according to the first embodiment, in a case where the number of images to be displayed in the slide show or the GIF video is considerably large.

The data generation device 50 selects the representative image group satisfying the second selection condition from the plurality of representative image groups based on the information related to the data amount of the representative compressed data. The data generation device 50 determines the order of displaying the plurality of images included in the image set based on the order assigned to the selected representative image group. Accordingly, even in a case where the number of images included in the image set is large, the data generation device 50 can generate the display image data for displaying the plurality of images in an appropriate order in accordance with various demands of the user, while reducing the calculation load.

The second selection condition is the representative image group having the smallest data amount after compression. Accordingly, the data generation device 50 can generate the display image data for the slide show or the GIF video such that the change between the adjacent images in arrangement of the plurality of images in the display order is minimized, while reducing a calculation load.

### <<Other Embodiments>>

The first and second embodiments described above are specific examples for understandable description of the data generation device and the data generation method according to the embodiment of the present invention, and are merely examples. Other embodiments are also conceivable.

In the second embodiment, the processor of the data generation device 50 classifies the plurality of images included in the image set into two or more image groups based on the image feature amounts of the plurality of images included in the image set. However, the present invention is not limited to this.

For example, the processor of the data generation device may classify the plurality of images included in the image set into two or more image groups based on information about a storage date and time in the image data of each of the plurality of images included in the image set.

More specifically, in a case where two images having different dates and times of storage in the user terminal 100 have a difference in date and time within a certain time, the two images may be classified into the same image group. In a case where the difference in date and time is greater than the certain time, the two images may be classified into different image groups.

In this case, the plurality of images included in the image set can be classified into two or more image groups through simple processing. Thus, the calculation load in the generation processing of the display image data can be reduced.

In the second embodiment, the data generation device 50 comprises the second display order determination unit 73 and determines the display order in units of image groups. However, the second display order determination unit 73 may not be comprised. In this case, the data generation device 50 may provide the display image data for the slide show or the GIF video for each image group.

This will be more specifically described with reference to the example illustrated in Fig. 8A.

The processor of the data generation device 50 determines the order of displaying the plurality of images included in the first image group based on the order assigned to the h-th display image group selected in the first image group. The processor of the data generation device 50 generates the display image data for the slide show or the GIF video image consisting of the plurality of images included in the first image group.

The processor of the data generation device 50 determines the order of displaying the plurality of images included in the second image group based on the order assigned to the i-th display image group selected in the second image group. The processor of the data generation device 50 determines the order of displaying the plurality of images included in the third image group based on the order assigned to the j-th display image group selected in the third image group. The processor of the data generation device 50, for each of the second and third image groups, generates the display image data for the slide show or the GIF video image consisting of the plurality of images included in each image group.

The data generation device 50 is not limited to generation of all of the plurality of images included in the image set as one display image data and may generate a plurality of pieces of display image data and provide a plurality of slide shows or GIF videos to the user.

In the second embodiment, the representative image selection unit 74 selects the combination of the image displayed first and the image displayed last in the display image group determined by the display image group selection unit 72 as the representative image. However, the present invention is not limited to this.

For example, the representative image selection unit 74 may select only one of the image displayed first or the image displayed last in the display image group as the representative image or may select an image other than the first or last image as the representative image.

In the first embodiment, the first selection condition is having the smallest data amount of the compressed data. In the second embodiment, the second selection condition is having the smallest data amount of the representative compressed data. However, the first and second selection conditions are not limited to this. For example, the first and second selection conditions may correspond to the smallest to t-th (t is a natural number greater than or equal to 2) smallest data amounts of the compressed data.

In the first embodiment, the processor 10A executes the thinning processing on the display image data (in a strict sense, the display image data before processing). However, the present invention is not limited to this. For example, the thinning processing may not be executed in a case where the data amount of the generated display image data is not so large.

Meanwhile, for example, the processor 10A may execute the thinning processing in a case where the number of images to be displayed exceeds a threshold value. In this case, the processor 10A may set a different threshold value in executing the thinning processing for each of the slide show and the GIF video. For example, in the GIF video in which the screen switches instantaneously, executing the thinning processing may result in an unnatural transition between images compared to that in the slide show. Thus, execution of the thinning processing may be suppressed by setting the threshold value to a relatively high value.

The data generation devices 10 and 50 may have a function of recommending the slide show in a case where a predetermined compression ratio is not reached after creating the compressed data for each display image group. That is, in the GIF video in which the change between the adjacent images in displaying the plurality of images in order is large and in which the screen switches instantaneously, a low compression ratio may result in an unnatural transition between displayed images. Thus, for example, the data generation device may recommend the user to switch to the slide show even in a case where the user selects the GIF video image.

In creating the plurality of display image groups, the processor 10A of the data generation device 10 according to the first embodiment may use a thumbnail image of each of the plurality of images included in the image group. In this case, a calculation load in the data generation device 10 can be reduced.

In at least one of classifying the plurality of images included in the image set into two or more image groups or creating the plurality of representative image groups, the processor of the data generation device 50 in the second embodiment may use a thumbnail image of each of the plurality of images included in the image set. In this case, the calculation load in the data generation device 50 can be reduced.

The configuration of the data generation system is an example of a configuration to which the data generation device according to the embodiment of the present invention is applied, and the present invention is not limited to this. For example, a system not comprising the printer 12 may be used, or a configuration of the user terminal 100 not equipped with the camera may be used.

In the data generation system, the data generation devices 10 and 50 are composed of the server computers. However, the present invention is not limited to this. For example, the data generation device according to the embodiment of the present invention may be composed of the user terminal 100. In this case, a series of data processing for generating the display image data for the slide show or the GIF video can be executed using a function of the user terminal 100 without passing through the network 11.

The configuration of the data generation system corresponds to a case where the plurality of images stored in the user terminal 100 are transmitted to the server computer from the user terminal 100 in generating the display image data. However, the configuration of the data generation system is not limited to this. For example, the plurality of images may be stored in the server computer in association with the user. In this case, the user may select the generation image for generating the display image data from the images associated with the user among the plurality of images stored in the server computer. The display image data may be generated using the selected generation image.

The processor comprised in the data generation device according to the embodiment of the present invention includes various processors. Examples of the various processors include a CPU that is a general-purpose processor functioning as various processing units by executing software (a program).

The various processors include a programmable logic device (PLD) such as a field programmable gate array (FPGA) that is a processor having a circuit configuration changeable after manufacture.

The various processors include a dedicated electric circuit or the like such as an application specific integrated circuit (ASIC) that is a processor having a circuit configuration dedicatedly designed to perform specific processing.

One processing unit of the data generation device according to the embodiment of the present invention may be composed of one of the various processors or may be composed of a combination of two or more processors of the same type or different types, for example, a combination of a plurality of FPGAs or a combination of an FPGA and a CPU.

A plurality of functional units of the data generation device according to the embodiment of the present invention may be composed of one of the various processors, or two or more of the plurality of functional units may be collectively composed of one processor.

One processor may be composed of a combination of one or more CPUs and software, and this processor may function as the plurality of functional units, as in the embodiments.

For example, as represented by a system on chip (SoC), a processor that implements functions of the entire system including the plurality of functional units in the data generation device according to the embodiment of the present invention in one integrated circuit (IC) chip may be used. A hardware configuration of the various processors may be an electric circuit (circuitry) in which circuit elements such as semiconductor elements are combined.

### Explanation of References

1: server computer
10, 50: data generation device
10A: processor
10B: memory
10C: communication interface
10D: storage device
11: network
12: printer
21, 61: receiving unit
22, 62: storage unit
23, 63: image acquisition unit
24, 64: image group setting unit
25: display order determination unit
26, 69: display image group creation unit
27, 70: compressed data creation unit
28, 71, 77: data amount calculation unit
29, 72: display image group selection unit
30, 79: data generation unit
31, 80: data transmission unit
65: image set setting unit
66: feature amount calculation unit
67: image classification unit
68: first display order determination unit
73: second display order determination unit
74: representative image selection unit
75: representative image group creation unit
76: representative compressed data creation unit
78: representative image group selection unit
100: user terminal
D1, D2, D3: screen
P1: first printed matter
P2: second printed matter
Q: accessory image
S: data generation system

## Claims

1. A data generation device comprising:
a processor,
wherein the processor is configured to:
set a display image group to which an order of displaying a plurality of images included in an image group is assigned, and create a plurality of display image groups by changing the assigned order;
for each of the plurality of display image groups, create compressed data by compressing image data of each of a plurality of images included in the display image group in accordance with the assigned order; and
select the display image group satisfying a first selection condition from the plurality of display image groups based on information related to a data amount of the compressed data.

2. The data generation device according to claim 1,
wherein the first selection condition is having a smallest data amount after compression.

3. The data generation device according to claim 1,
wherein the processor is configured to execute thinning processing on data generated based on the selected display image group.

4. The data generation device according to claim 1,
wherein image data of at least one image of the plurality of images included in the image group does not include information about an imaging date and time.

5. The data generation device according to claim 1,
wherein image data of at least one image of the plurality of images included in the image group is image data obtained by scanning a printed matter.

6. The data generation device according to claim 1,
wherein the processor is configured to use a thumbnail image of each of the plurality of images included in the image group in creating the plurality of display image groups.

7. The data generation device according to claim 1,
wherein the processor is configured to classify a plurality of images included in an image set into two or more image groups based on image feature amounts of the plurality of images included in the image set.

8. The data generation device according to claim 1,
wherein the processor is configured to classify a plurality of images included in an image set into two or more image groups based on information about a storage date and time of image data of each of the plurality of images included in the image set.

9. The data generation device according to claim 7 or 8,
wherein the processor is configured to:
select a representative image for each of the two or more image groups;
set a representative image group to which an order of displaying a plurality of the representative images is assigned, and create a plurality of representative image groups by changing the assigned order;
for each of the plurality of representative image groups, create representative compressed data by compressing image data of each of the plurality of representative images included in the representative image group in accordance with the assigned order;
select the representative image group satisfying a second selection condition from the plurality of representative image groups based on information related to a data amount of the representative compressed data; and
determine an order of displaying the plurality of images included in the image set in accordance with the order assigned to the selected representative image group.

10. The data generation device according to claim 9,
wherein the second selection condition is having a smallest data amount after compression.

11. The data generation device according to claim 9,
wherein the processor is configured to, in at least one of classifying the plurality of images included in the image set into two or more image groups or creating the plurality of representative image groups, use a thumbnail image of each of the plurality of images included in the image set.

12. A data generation method comprising:
via a processor,
a step of setting a display image group to which an order of displaying a plurality of images included in an image group is assigned, and creating a plurality of display image groups by changing the assigned order;
a step of creating, for each of the plurality of display image groups, compressed data by compressing image data of each of a plurality of images included in the display image group in accordance with the assigned order; and
a step of selecting the display image group satisfying a first selection condition from the plurality of display image groups based on information related to a data amount of the compressed data.

13. The data generation method according to claim 12, further comprising:
via the processor,
a step of classifying a plurality of images included in an image set into two or more image groups based on image feature amounts of the plurality of images included in the image set.

14. The data generation method according to claim 13, further comprising:
via the processor,
a step of selecting a representative image for each of the two or more image groups;
a step of setting a representative image group to which an order of displaying a plurality of the representative images is assigned, and creating a plurality of representative image groups by changing the assigned order;
a step of creating, for each of the plurality of representative image groups, representative compressed data by compressing image data of each of the plurality of representative images included in the representative image group in accordance with the assigned order;
a step of selecting the representative image group satisfying a second selection condition from the plurality of representative image groups based on information related to a data amount of the representative compressed data; and
a step of determining an order of displaying the plurality of images included in the image set in accordance with the order assigned to the selected representative image group.

15. A program for causing a computer to execute each step included in the data generation method according to any one of claims 12 to 14.

16. A computer-readable recording medium on which a program for causing a computer to execute each step included in the data generation method according to any one of claims 12 to 14 is recorded.
